(19)

Europäisches
Patentamt

European
Patent Office

Office européen
des brevets

(11) **EP 1 978 326 A1**

(12) **EUROPÄISCHE PATENTANMELDUNG**

(43) Veröffentlichungstag:
**08.10.2008 Patentblatt 2008/41**

(21) Anmeldenummer: **07007246.7**

(22) Anmeldetag: **05.04.2007**

(51) Int Cl.:
*F41J 5/02* (2006.01)   *G01B 11/00* (2006.01)
*G01S 5/16* (2006.01)   *G01V 8/10* (2006.01)

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Knestel Elektronik GmbH**
**87496 Hopferbach (DE)**

(72) Erfinder:
• **Knestel, Anton**
  **87496 Hopferbach (DE)**
• **Hank, Jürgen**
  **86899 Landsberg (DE)**

(74) Vertreter: **Beetz & Partner**
**Patentanwälte**
**Steinsdorfstrasse 10**
**80538 München (DE)**

(54) **Vorrichtung und Verfahren zur elektronischen Trefferauswertung**

(57)     Die Erfindung betrifft eine Vorrichtung zur Erfassung der Position eines eine Auswertefläche durchfliegenden Gegenstands (20), insbesondere eines Projektils oder Pfeils, mit zumindest einer Lichtquelle (1, 1'), die Licht in einer Auswerteebene (16) aussendet, zumindest einer Umlenkeinheit (3, 3', 7, 23, 24), die das in der Auswerteebene (16) ausgesendete Licht so umlenkt, dass es sich nach der Umlenkung in einer Rücksendeebene (17) befindet, wobei zumindest einer Kameraeinrichtung (4, 4') das Licht aus der Rücksendeebene (17) zugeführt wird und einer Auswerteeinrichtung (11), die ein Signal der Kameraeinrichtung (4, 4') auswertet und eine Position des Gegenstands (20) ausgibt. Durch die Erfindung wird eine kompakte elektronische Vorrichtung zur Trefferauswertung realisiert, die eine hohe Auswertegenauigkeit aufweist.

Fig 4

EP 1 978 326 A1

**Beschreibung**

Die Erfindung betrifft eine Vorrichtung und ein Verfahren zur Erfassung der Position eines durch eine Auswertefläche fliegenden Gegenstands, insbesondere eines Projektils oder Pfeils, wobei die Vorrichtung und das Verfahren insbesondere für Schießstände, speziell für Sportschützen, eingesetzt werden kann.

In der DE 44 15 944 A1 ist eine elektronische Zielscheibe und ein Verfahren zu dessen Auswertung beschrieben, wobei eine Lichtquelle über eine Optik eine Mattscheibe beleuchtet. Die Optik bildet eine Schattenprojektion eines Projektils auf der Mattscheibe auf einen Zielsensor ab. Mittels einer Leitung tauscht der Zielsensor die gewonnene Information mit einer Systemsteuerung aus. In den Strahlengang der Lichtquelle sind Schlitzscheiben eingebracht.

Ein Nachteil bei diesem Verfahren besteht darin, dass durch die zusätzliche Mattscheibe bzw. Leinwand das Lichtsignal geschwächt wird, was bei den erforderlichen kurzen Belichtungszeiten einen erhöhten technischen Aufwand begründen kann. Zusätzlich muss der Abstand der Kamera zum Messfeld eingehalten werden, was eine große Bauform zur Folge hat. Darüber hinaus wird die punktförmige Lichtquelle durch die Linse aufgeweitet, was zusätzlich einen weiteren Abstand zwischen der Lichtquelle und der auswertenden Fläche mit der dazwischen angeordneten Linse erfordert.

Eine Aufgabe der Erfindung ist es, eine Vorrichtung und ein Verfahren zur Erfassung der Position eines durch eine Auswertefläche fliegenden Gegenstands, insbesondere eines Projektils oder Pfeils, zu realisieren, die eine sehr kompakte Bauform und eine hohe Auswertegenauigkeit aufweisen.

Die Aufgabe wird gemäß den Merkmalen der unabhängigen Patentansprüche gelöst. Die abhängigen Patentansprüche zeigen vorteilhafte Ausführungsformen und Weiterentwicklungen der Erfindung auf.

Die erfindungsgemäße Vorrichtung und das erfindungsgemäße Verfahren kann für Schießstände, speziell für Sportschützen, angewendet werden. Das Geschoss bzw. der Pfeil kann hierbei zwei vorzugsweise orthogonal (90°) zueinander angeordnete Lichtvorhänge durchdringen. Die beiden Lichtvorhänge können in Flugrichtung des Schusses im wesentlichen übereinander bzw. überdeckend angeordnet sein, so dass keine Parallaxenfehler entstehen können. Das von beispielsweise stabförmig bzw. streifenförmig ausgebildeten Lichtquellen ausgesendete Licht kann über eine jeweilige Linse an eine jeweilige Kameraeinrichtung weitergeleitet werden, wobei die Kameraeinrichtung beispielsweise eine Zeilenkamera enthalten kann. Ein Objektiv dieser Kamera kann zusammen mit der zugehörigen Linse ein telezentrisches Objektiv bilden. Weiterhin kann der Strahlengang direkt hinter der Linse zweimal um beispielsweise 90° umgelenkt werden, so dass die Kameraeinrichtung auf derselben Seite wie die Lichtquelle angeordnet werden kann, wodurch sich eine sehr kompakte Bauform erreichen lässt.

Erfindungsgemäß weist die Vorrichtung zur optischen Erfassung der Position eines durch eine Auswertefläche fliegenden Gegenstands, insbesondere eines Projektils oder Pfeils, zumindest eine einen Lichtstreifen aussendende Lichtquelle, die Licht in eine Auswerteebene aussendet, zumindest eine Linse, durch die das von der Lichtquelle ausgesendete Licht geleitet wird, zumindest eine Kameraeinrichtung, in die das Licht nach der Linse geführt wird und/oder eine Auswerteeinrichtung auf, die ein Signal der Kameraeinrichtung auswertet und eine Position des Gegenstands ausgibt. Das erfindungsgemäße Verfahren kann über eine Auswerteeinrichtung Positionswerte ermitteln, die x-Achsenwerten und y-Achsenwerten entsprechen, woraus eine Position in x- und y-Richtung eines die Auswerteebene durchfliegenden Gegenstands ermittelt wird.

Weiterhin kann zumindest eine Umlenkeinrichtung vorgesehen sein, die hinter der Linse angeordnet ist und das Licht so umlenkt, dass es wieder durch die Linse geleitet wird, wobei sich das Licht nach der Linse in einer Rücksendeebene befindet. Anstatt der Verwendung von einer Linse, die zweimal durchstrahlt wird, können auch zwei Linsen verwendet werden, wobei beispielsweise das zur Umlenkeinrichtung strahlende Licht durch die eine Linse geführt wird und das von der Umlenkeinrichtung zurückgeführte Licht durch die andere Linse geführt wird.

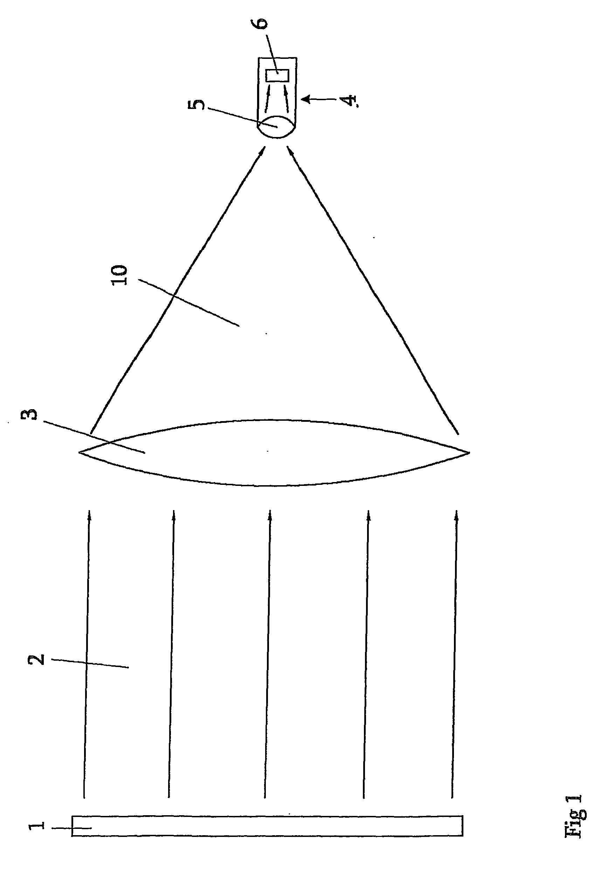

Durch das Vorsehen der Umlenkeinrichtung und das zweimalige Nutzen der Linse kann eine sehr kompakte Vorrichtung erreicht werden. Darüber hinaus können zur weiteren Erhöhung der Erfassungsgenauigkeit auch Positionswerte herangezogen werden, die beim Durchfliegen des Gegenstands der Rücksendeebene erhalten werden. Weiterhin kann anhand der Anzahl der von der Kameraeinrichtung erfassten Bilder, auf denen ein Schatten des Gegenstands erkennbar ist, auf eine Geschwindigkeit des Gegenstands geschlossen werden, wobei die Geschwindigkeit als Plausibilitätskontrolle für das erfasste Signal verwendet werden kann. Dadurch ist es möglich, die zu erfassenden, schnell fliegenden Projektile von anderen, sich eventuell durch die Erfassungseinrichtung bewegenden Körpern und Partikeln zu unterscheiden, um dadurch Fehlsignale auszufiltern. Es können jeweils zwei Lichtquellen, zwei Linsen, zwei Umlenkeinrichtungen und zwei Kameraeinrichtungen vorgesehen sein. Das von den beiden Lichtquellen ausgesendete Licht kann vorzugsweise in einem Winkel von im wesentlichen 90° zueinander angeordnet sein. Das von den Lichtquellen ausgesendete Licht kann die Auswerteebene gleichförmig mit homogenem Licht durchsetzen und trifft auf der anderen Seite auf eine jeweilige Linse. Von der jeweiligen Linse trifft das Licht auf die jeweilige Umlenkeinrichtung, die das Licht dann wiederum durch die jeweilige Linse zurück in der Rücksendeebene auf die jeweilige Kameraeinrichtung reflektiert. Die Linsen und die Objekte der Kameraeinrichtung sind derart ausgelegt, dass eine telezentrische Linse erhalten wird, d. h., dass der Öffnungswinkel der Objektive durch die Linsen so korrigiert wird, dass sich ein paralleler Strahlengang ergibt. Dies gilt für die x- und die y- bzw. für die horizontale und die vertikale Richtung (siehe Fig. 1).

Das von den beiden Lichtquellen ausgesendete Licht kann sich vorzugsweise in der Auswerteebene und/oder in der Rücksendeebene überdecken. Es ist jedoch auch möglich, dass das Licht der beiden Lichtquellen in unterschiedlichen Ebenen ausgesendet wird. Das Gleiche gilt für das Licht in der Rücksendebene, welches auch in unterschiedliche Ebenen zurückgesendet werden kann. Der Abstand dieser jeweiligen unterschiedlichen Ebenen sollte jedoch nur gering sein, um die Auswertegenauigkeit nicht zu stark zu vermindern.

Der im vorgenannten Stand der Technik geschilderte Nachteil der großen Baugröße resultiert daraus, dass je nach Objektiv-Brennweite der Abstand der Kamera zur Sammellinse in etwa gleich groß wie das auszuwertende Schussfeld sein muss, d. h., die komplette Apparatur würde zumindest die vierfache Fläche des auszuwertenden Schussfeldes aufweisen. Erfindungsgemäß kann dieser Nachteil dadurch eliminiert werden, dass das Licht hinter der Sammellinse durch beispielsweise zwei Spiegel umgelenkt wird. Durch diese Spiegel in der Umlenkeinrichtung entstehen zwei Lichtvorhänge, ein paralleler, telezentrischer Lichtvorhang und ein nichttelezentrischer Lichtvorhang. Die dem Schützen zugewandte Seite weist den telezentrischen Bereich auf. Der zweimal umgelenkte Strahlengang in der Rücksendeebene kann einen Winkel aufweisen, der dem Öffnungswinkel des Objektivs der Kameraeinrichtung entspricht.

Der Abstand des telezentrischen und des nichttelezentrischen Lichtvorhangs sollte hierbei mindestens so groß sein, dass das Projektil nicht während einer Integrationszeit eines Sensors der Auswerteeinrichtung durch beide Lichtvorhänge fliegt, d. h., dass das durchfliegende Projektil (der sich bewegende Gegenstand) auf dem Kamera-Chip zweimal hintereinander einen Schatten erzeugt, wobei nur der erste (telezentrische) Lichtvorhang in der Auswerteebene von vorrangiger Bedeutung ist. Wie voranstehend schon kurz erläutert, kann auch der zweite Lichtvorhang zur Erhöhung der Messgenauigkeit verwendet werden. Dies ist jedoch nur dann möglich, wenn sich das Projektil im Zentrumsbereich der Vorrichtung befindet.

Es ist weiterhin vorteilhaft, den Strahlengang zweimal durch die entsprechende Linse zu leiten. Dadurch kann die nötige Brennweite der Linse verdoppelt werden, d. h., die Linsendicke kann annähernd halbiert werden.

Weiterhin kann die Sammellinse als Fresnel-Linse ausgebildet werden. Die voranstehend erwähnten Umlenkspiegel können weiterhin durch ein 90°-Prisma mit Totalreflektion ersetzt werden.

Gemäß einer weiteren Möglichkeit können die beiden Umlenkspiegel konkav ausgeformt werden, um damit den telezentrischen Effekt des Objektivs zu erreichen.

Um das von der Lichtquelle zur Linse abgestrahlte Licht möglichst homogen zu gestalten, kann zusätzlich ein Streulichtmittel vorgesehen sein. Dieses Streulichtmittel kann im Strahlengang nach einem transparenten Stab vorgesehen sein, in den Stab integriert werden, und/oder durch den Stab realisiert werden. Der Stab kann im Strahlengang nach lichterzeugenden Elementen, beispielsweise Leuchtdioden, vorgesehen sein. Die Lichtquelle kann die lichterzeugenden Elemente, den Stab und/oder die bzw. das Streulichtmittel enthalten.

Die Erfindung wird nun anhand von beispielhaften und schematischen Figuren näher erläutert.

Es zeigen

Fig. 1 eine schematische Ansicht einzelner Komponenten der Erfindung mit einer Sammellinse,
Fig. 2 eine schematische Ansicht der Erfindung mit einer Fresnel-Linse,
Fig. 3 und 3a schematische Ansichten der Erfindung mit zwei Strahlengängen,
Fig. 4 ein schematischer Schnitt durch die erfindungsgemäße Vorrichtung in einer Richtung (x- oder y-Richtung),
Fig. 5 eine schematische Anordnung der optischen Elemente in x- und y-Richtung,
Fig. 6 eine schematische Ansicht der elektrischen Steuerung der Erfindung.

In der Fig. 1 ist eine vorzugsweise lineare bzw. stabförmige Lichtquelle 1 dargestellt, die ihr Licht in Richtung der Linse abstrahlt. Die Lichtquelle 1 kann derart ausgebildet sein, dass das Licht als Lichtstreifen abgestrahlt wird. Das Licht 2 wird von einer Sammellinse 3 oder einem Parabolspiegel 23, 24 im Winkel derart verändert, dass ein Strahlengang 10 erhalten wird, der mit einem Öffnungswinkel eines Objektivs 5 einer Kameraeinrichtung 4 übereinstimmt. Das Objektiv 5 fokussiert das einfallende Licht auf einen positionssensitiven Lichtempfindlichkeitsbereich eines vorzugsweise Halbleiter-Bauelements bzw. Sensors 6, wie beispielsweise eines CCD- oder C-MOS-Zeilensensors. In der Fig. 1 ist schematisch lediglich ein Strahlengang in eine Richtung dargestellt (x- oder y-Richtung der Erfassungsvorrichtung).

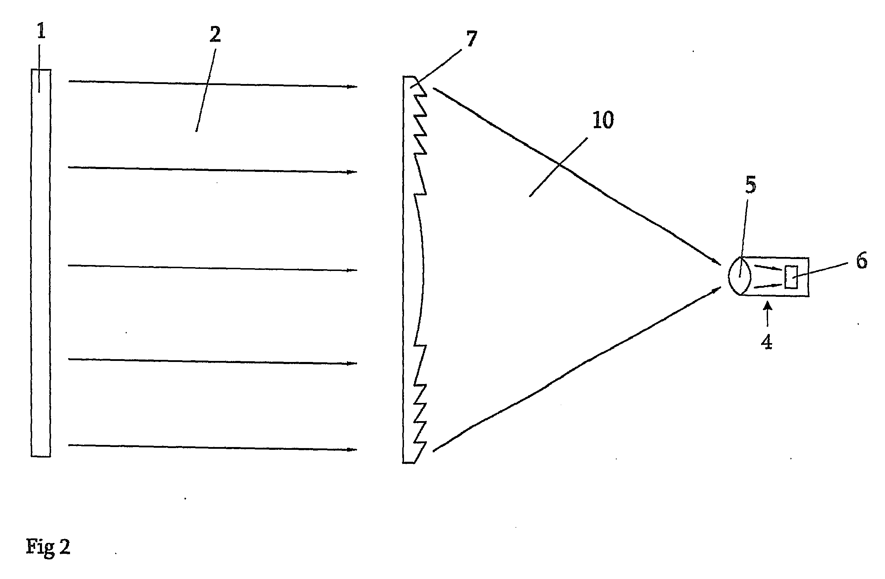

In der Fig. 2 ist im Unterschied zur Fig. 1 anstatt der Sammellinse 3 eine Fresnel-Linse 7 dargestellt.

Die Sammellinse 3 und/oder die Fresnel-Linse 7 bilden zusammen mit der Kameraeinrichtung 4 ein telezentrisches Objektiv, das auf der jeweiligen linken Seite der Linse 3, 7 einen parallelen Strahlengang und auf der rechten Seite einen dreieckigen Strahlengang aufweist.

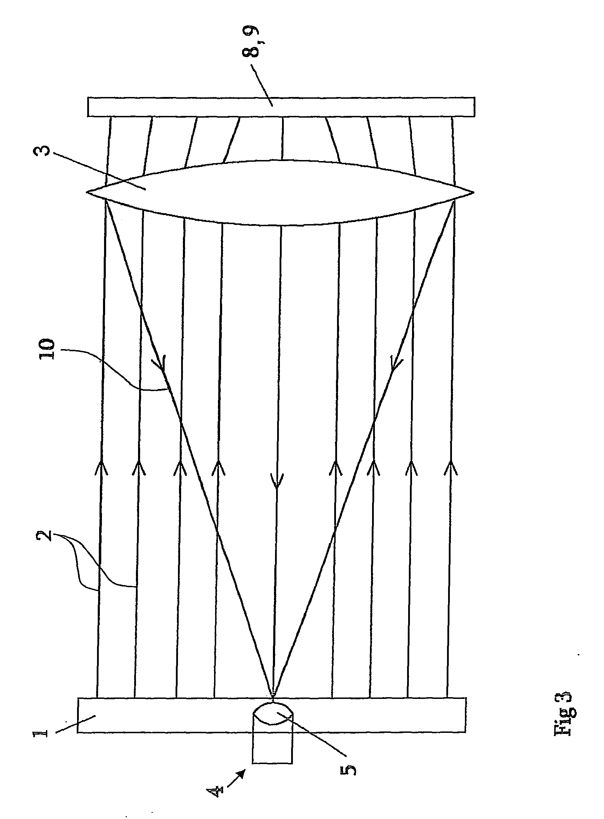

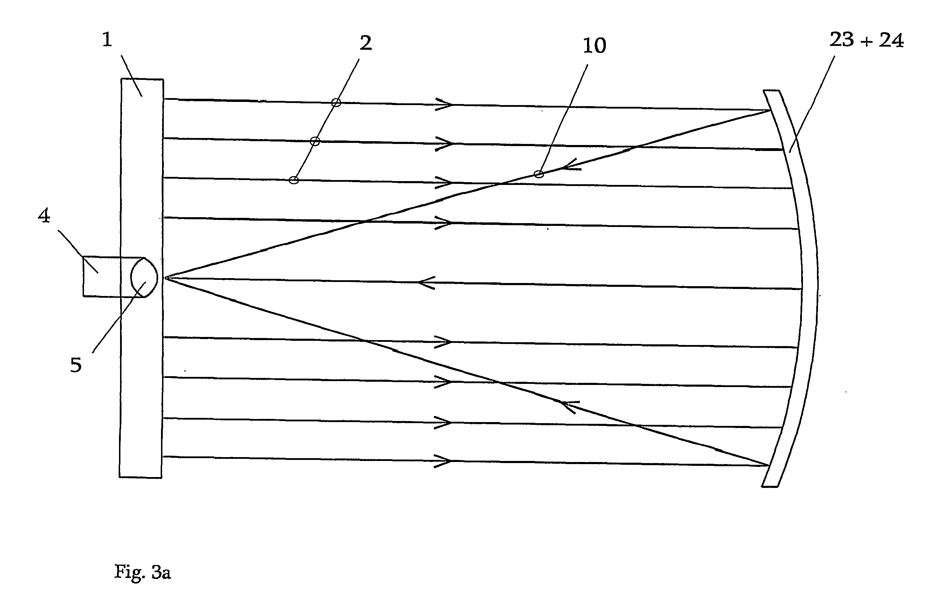

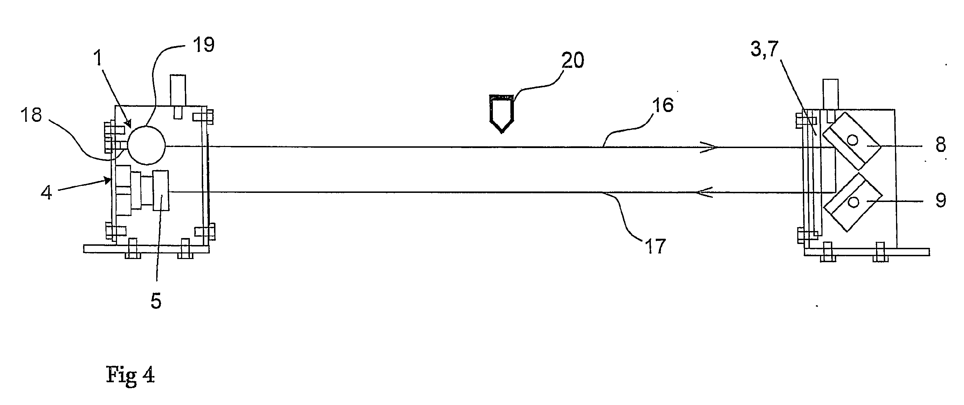

In der Fig. 3 ist zur Platzoptimierung eine vorteilhafte Ausgestaltung der Erfindung dargestellt. Zur Platzoptimierung wird der Strahlengang hinter der Linse 3 über beispielsweise zwei Spiegel 8, 9 der Umlenkeinrichtung umgelenkt und entgegen dem parallelen Lichtvorhang (Primärlichtvorhang) in Richtung Lichtquelle 1 zurückreflektiert. Der zurückreflektierte Lichtvorhang 10 befindet sich in einem vorbestimmten Abstand zum Primärlichtvorhang 2. Der Primärlichtvorhang 2 befindet sich in einer Auswerteebene 16 und der zurückreflektierte Lichtvorhang 10 befindet sich in einer Rücksendeebene (siehe Fig. 4).

In der Fig. 4 ist der prinzipielle Aufbau einer erfindungsgemäßen Erfassungs- bzw. Abtasteinheit in einer Richtung (x- oder y-Richtung) dargestellt. Über beispielsweise Leuchtdioden 18, die in einer Reihe angeordnet sein können, wird Licht ausgesendet. Dieses Licht trifft auf einen zumindest teilweise transparenten, vorzugsweise rotationssymmetrisch ausgebildeten Stab 19, der das Licht in Richtung Linse fokussiert. Der Stab kann beispielsweise aus Glas bestehen.

Um das zur Linse abgestrahlte Licht möglichst homogen zu gestalten, kann zusätzlich ein Streulichtmittel vorgesehen sein. Dieses Streulichtmittel kann im Strahlengang nach dem Stab 19 vorgesehen sein oder in den Stab 19 integriert werden, und/oder durch den Stab 19 realisiert werden. Das Streulichtmittel kann aus milchigem, transparentem Material bestehen. Die vorstehend erläuterten Merkmale der Lichtquelle sind für alle geschilderten Ausführungsformen anwendbar, insbesondere auch für Realisierungen der Erfindung ohne Umlenkeinrichtung.

Der Stab 19 sendet den Strahlengang 2 in der Auswerteebene 16 zu der Sammellinse 7. Von der Sammellinse 7 verläuft das Licht zu der Umlenkeinrichtung 8, 9, die aus einem Spiegel 8 und einem Spiegel 9 besteht. An dieser Stelle sei angemerkt, dass anstatt der Sammellinse 3 auch eine Fresnel-Linse 7 vorgesehen sein kann. Hinter der entsprechenden Linse 3, 7 befindet sich der um 45° geneigte Spiegel 8, der das einfallende Licht auf einen zweiten Spiegel 9 umlenkt. Dieser Spiegel ist ebenfalls um 45° geneigt. Durch die beiden Spiegel 8, 9 der Umlenkeinrichtung wird das Licht in eine Rücksendeebene 17 geleitet, die zur Auswerteebene 16 parallel sein kann. Der umgelenkte Lichtvorhang in der Rücksendeebene 17 hat von dem ersten parallelen Lichtvorhang 2 in der Auswerteebene 16 einen derartigen Abstand, dass während der Belichtungszeit der Kameraeinrichtung 4 ein Projektil 20 nur den ersten Lichtvorhang 2 durchschreitet und den zweiten Lichtvorhang 10 noch nicht erreicht hat. Vorzugsweise liegen die Abstände der beiden Lichtvorhänge 2, 10 bzw. der Auswerteebene 16 und der Rücksendeebene 17 zwischen 10 und 30 mm. Belichtungszeiten können beispielsweise bei 60.000 Bilder/s liegen.

Wenn das Projektil 20 die Auswerteebene 16 durchschreitet, kann die Kameraeinrichtung 4 einen entsprechenden Schatten erfassen. Dieser Schatten kann dann von einer Auswerteeinrichtung erfasst werden. Da die in der Fig. 4 dargestellte Anordnung sowohl in x-Richtung als auch in y-Richtung vorgesehen ist, wird eine genaue Positionserfassung des Projektils 20 bzw. des sich bewegenden Gegenstands möglich.

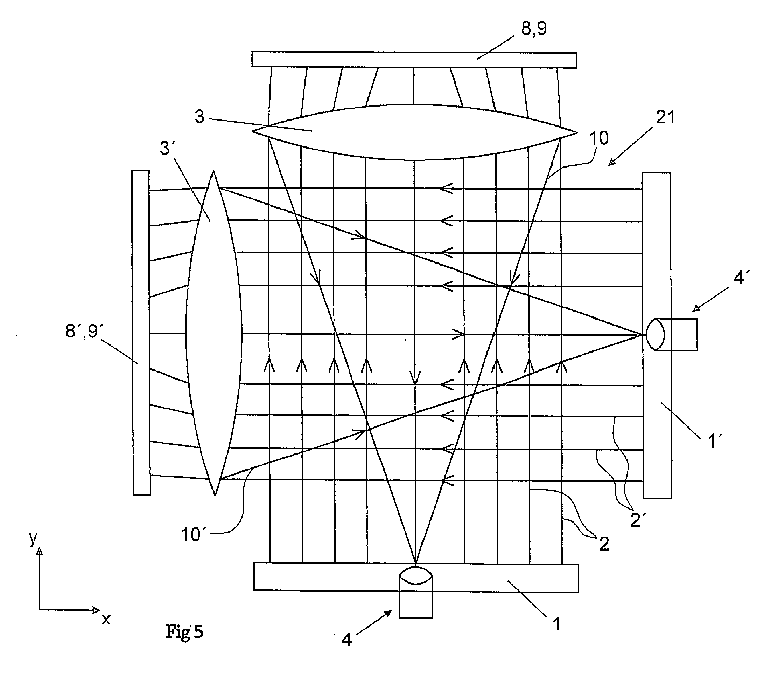

In der Fig. 5 sind die optischen Elemente der erfindungsgemäßen Vorrichtung schematisch in der x- und y-Richtung bzw. in der vertikalen und horizontalen Richtung dargestellt. Die erste Lichtquelle 1 und die zweite Lichtquelle 1' senden ihr Licht in x- bzw. y-Richtung aus. Diese parallelen Strahlengänge treffen auf der anderen Seite einer aktiven Auswertefläche 21 auf entsprechende Sammellinsen 3, 3'. Anstatt der dargestellten Sammellinsen 3, 3' können auch Fresnel-Linsen 7, 7' verwendet werden. Die aktive Auswertefläche 21 befindet sich in dem Schnittbereich der Strahlengänge 2 und 2'.

Das Licht wird durch die Spiegel 8, 9; 8', 9' der Umlenkeinrichtung zurückreflektiert und in Richtung der jeweiligen Lichtquelle 1, 1' zurückgeleitet. Die Zurückleitung des Lichts erfolgt allerdings in einer von der Auswerteebene 16 unterschiedlichen Rücksendeebene 17. Die vorgesehenen Linsen 3, 3' bzw. 7, 7' (nicht dargestellt) sind derart ausgebildet, dass der Lichtpfad die entsprechende Linse zweimal passiert. Dadurch ist die nötige Brennweite der entsprechenden Linse doppelt so groß, d. h., die Linse kann in etwa halb so dick ausgebildet werden. Das von den vorgenannten Linsen in Richtung der Kameraeinrichtung 4, 4' zurückreflektierte Licht 10, 10' ist in Schussrichtung gesehen hinter dem parallel verlaufenden (telezentrischen) Lichtfeld angeordnet. Das Geschoss bzw. der sich bewegende Gegenstand durchdringt den zurücklaufenden Lichtvorhang 10, 10' erst nachdem die Auswertung der Trefferlage durchgeführt ist.

Ausdrücklich sei an dieser Stelle erwähnt, dass anstatt der vorgenannten Objektive bzw. Fresnel-Linsen und Spiegel die Verwendung von Parabolspiegeln möglich ist. Diese Möglichkeit ist in der Figur 3a dargestellt. Hierbei sind zwei Parabolspiegel 23, 24 vorgesehen, die ebenfalls zweimal 45° zueinander ausgerichtet sein können, so dass auch hier der zweite Lichtvorhang in der Rücksendeebene 17 hinter dem ersten Primärlichtvorhang 2, 2' zurückgespiegelt wird. Würden in der Fig. 4 die beiden Spiegel 8, 9 parabolisch ausgeführt sein, könnte die Sammellinse 3, 7 entfallen, wie in der Fig. 3a dargestellt. Die Radien der Konkav-Spiegel (Hohlspiegel) können nach der folgenden Formel ermittelt werden:

$$f = r/2$$

f steht für die Brennweite des Lichts und r für den Radius des Spiegels.

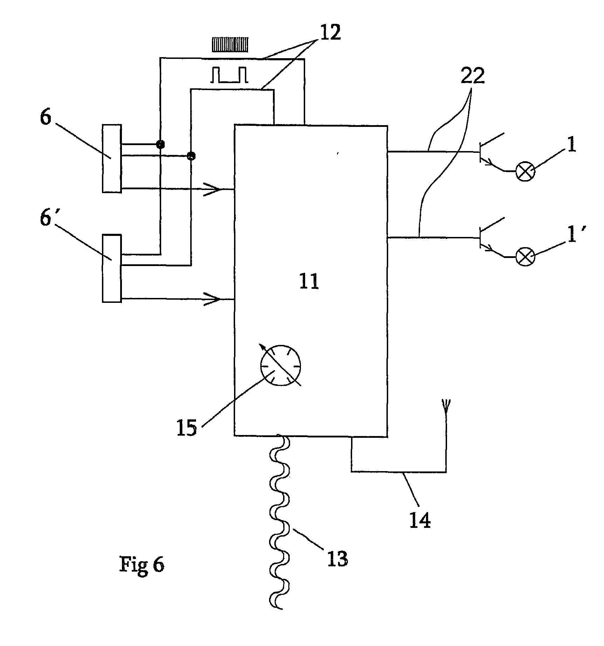

Aus der Fig. 5 ist ersichtlich, dass ein die Primärlichtvorhänge 2 und 2' durchfliegendes Projektil 20 eine x- und y-Position bei den entsprechenden Kameraeinrichtungen 4 und 4' ergeben, da bei beiden Kameraeinrichtungen 4 und 4' ein jeweiliger Schatten erfasst wird. Dieser Schatten kann entsprechend ausgewertet werden, um entsprechende Positionssignale auszugeben (siehe Fig. 6).

In der Fig. 6 ist ein Beispiel für eine elektrische Steuerung der erfindungsgemäßen Vorrichtung dargestellt. Eine Auswerteeinrichtung bzw. ein Controller 11 stellt über zwei entsprechende Ausgänge 22 eine Lichtstärke der linearen Lichtquellen 1 und 1' ein. Weiterhin werden Sensoren 6, 6'· vom Controller 11 eingelesen. Diese Sensoren 6, 6' sind vorzugsweise Zeilensensoren. Vom Controller 11 werden weiterhin Pixel- und Zeilenclocksignale 12 generiert. Die Lichtquellen 1 und 1' werden durch die von den Zeilensensoren 6 und 6' zurück gelieferten Signale gesteuert, so dass geschlossene Regelkreise entstehen. Die beiden Sensoren 6 und 6' werden durch die optische Anordnung gleichmäßig ausgeleuchtet. Fliegt nun beispielsweise ein Projektil 20 durch die beiden Lichtvorhänge 2 und 2', werden entsprechende Sektoren auf den Sensoren 6 und 6' abgedunkelt. Die vom Controller 11 so errechneten x- und y-Werte werden über ein Netzwerk beispielsweise an eine Visualisierung, die beim Schützen angeordnet sein kann, weitergeleitet. Weiterhin können die Signale direkt mit einem zentralen Rechner empfangen werden, so dass beispielsweise ein Wettbewerb online ausgewertet werden kann. Eine Datenübertragung kann vorteilhaft durch ein BUS-System 13 oder ein Funknetzwerk 14 erfolgen. Zusätzlich kann eine Codiereinrichtung 15 vorgesehen sein, die die Zugehörigkeit eines Datensatzes zu einem bestimmten Schießstand erlaubt, wenn mehrere entsprechende Vorrichtungen vorgesehen sind.

Die vorgenannten Merkmale und Ausführungsformen können in beliebiger Weise miteinander kombiniert werden.

## Patentansprüche

1. Vorrichtung zur Erfassung der Position eines eine Auswertefläche durchfliegenden Gegenstands (20), insbesondere eines Projektils oder Pfeils, mit zumindest einer einen Lichtstreifen aussendenden Lichtquelle (1, 1'), die Licht in einer Auswerteebene (16) aussendet, zumindest einer Umlenkeinheit , die das in der Auswerteebene (16) ausgesendete Licht so umlenkt, dass es sich nach der Umlenkung in einer Rücksendeebene (17) befindet, wobei zumindest einer Kameraeinrichtung (4, 4') das Licht aus der Rücksendeebene (17) zugeführt wird und einer Auswerteeinrichtung (11), die ein Signal der Kameraeinrichtung (4, 4') auswertet und eine Position des Gegenstands (20) ausgibt.

2. Vorrichtung nach Anspruch 1, **dadurch gekennzeichnet, dass** die Umlenkeinheit aus zumindest einem, vorzugsweise zwei Parabolspiegeln (23, 24) gebildet ist, deren Radius bevorzugt f= r/2 ist, wobei f für die Brennweite des Lichts und r für den Radius des Parabolspiegels (23, 24) steht.

3. Vorrichtung nach Anspruch 1 oder 2, **dadurch gekennzeichnet, dass** die zwei Parabolspiegel (23, 24) derart zueinander ausgerichtet sind, dass das Licht in der Rücksendeebene (17) parallel zum Licht in der Auswertebene (16) verläuft und versetzt um den Abstand der Ebenen (16, 17) um im wesentlichen 180° umgelenkt wird.

4. Vorrichtung nach Anspruch 1, **dadurch gekennzeichnet, dass** zumindest eine Linse (3, 3', 7) vorgesehen ist, durch die das von der Lichtquelle (1, 1') ausgesendete Licht geleitet wird und die Umlenkeinheit aus zumindest einer Umlenkeinrichtung (8, 8'; 9, 9') gebildet ist, die hinter der Linse (3, 3', 7) angeordnet ist und das Licht so umlenkt, dass es wieder durch die Linse (3, 3', 7) geleitet wird, wobei sich das Licht nach der Linse (3, 3', 7) in der Rücksendeebene (17) befindet.

5. Vorrichtung nach Anspruch 1 bis 4, **dadurch gekennzeichnet, dass** eine erste Lichtquelle (1) und eine zweite Lichtquelle (1') vorgesehen sind, wobei die Lichtquellen (1,1') das Licht im wesentlichen orthogonal zueinander in der Auswerteebene (16) aussenden.

6. Vorrichtung nach zumindest einem der Ansprüche 1 bis 5, **dadurch gekennzeichnet, dass** eine erste und eine zweite Linse (3, 3', 7) vorgesehen sind, wobei das Licht der ersten Lichtquelle (1) auf die erste Linse (3, 7) und das Licht der zweiten Lichtquelle (1') auf die zweite Linse (3', 7) trifft.

7. Vorrichtung nach zumindest einem der Ansprüche 1 bis 6, **dadurch gekennzeichnet, dass** das Licht nach der ersten Linse (3) auf eine erste Umlenkeinrichtung (8, 9) trifft und das Licht nach der zweiten Linse (3') auf eine zweite Umlenkeinrichtung (8', 9') trifft.

8. Vorrichtung nach zumindest einem der Ansprüche 1 bis 7, **dadurch gekennzeichnet, dass** ein erster und ein zweiter Parabolspiegel (23, 24) vorgesehen sind, wobei das Licht der ersten Lichtquelle (1) auf den ersten Parabolspiegel (23) und das Licht der zweiten Lichtquelle (1) auf den zweiten Parabolspiegel (24) trifft.

9. Vorrichtung nach zumindest einem der Ansprüche 1 bis 8, **dadurch gekennzeichnet, dass** das Licht nach der ersten Umlenkeinrichtung (8, 9) durch die erste Linse (3, 7) geleitet wird und das Licht nach der zweiten Umlenkeinrichtung (8', 9') durch die zweite Linse (3', 7) geleitet wird.

10. Vorrichtung nach zumindest einem der Ansprüche 1 bis 9, **dadurch gekennzeichnet, dass** das Licht nach einer ersten Umlenkeinheit zu einer ersten Kameraeinrichtung (4) geleitet wird und das Licht nach einer zweiten Umlenkeinheit zu einer zweiten Kameraeinrichtung (4') geleitet wird.

**11.** Vorrichtung nach zumindest einem der Ansprüche 1 bis 9, **dadurch gekennzeichnet, dass** das Licht nach der ersten Umlenkeinrichtung (8,9) und nach dem Durchdringen der ersten Linse (3, 7) zu einer ersten Kameraeinrichtung (4) geleitet wird und das Licht nach der zweiten Umlenkeinrichtung (8', 9') und nach dem Durchdringen der zweiten Linse (3',7) zu einer zweiten Kameraeinrichtung (4') geleitet wird.

**12.** Vorrichtung nach zumindest einem der Ansprüche 1 bis 11, **dadurch gekennzeichnet, dass** sich das zu der ersten und zu der zweiten Kameraeinrichtung (4, 4') geleitete Licht in der Rücksendeebene (17) befindet.

**13.** Vorrichtung nach zumindest einem der Ansprüche 1 bis 12, **dadurch gekennzeichnet, dass** das Licht in der Auswerteebene (16) einen parallelen Strahlengang aufweist.

**14.** Vorrichtung nach zumindest einem der Ansprüche 1 bis 13, **dadurch gekennzeichnet, dass** zumindest die erste oder die zweite Lichtquelle (1,1') aus einer Vielzahl von Leuchtdioden (18) gebildet werden.

**15.** Vorrichtung nach zumindest einem der Ansprüche 1 bis 14, **dadurch gekennzeichnet, dass** die erste und die zweite Lichtquelle (1, 1') ein Streulichtmittel enthält, das das Licht durch Streuung verteilt und ein homogenes Lichtband in der Auswerteebene (16) erzeugt.

**16.** Vorrichtung nach zumindest einem der Ansprüche 1 bis 15, **dadurch gekennzeichnet, dass** das Streulichtmittel aus Milchglas besteht und in einem transparenten Stab (19) integriert ist oder im Strahlengang nach dem Stab (19) vorgesehen ist.

**17.** Vorrichtung nach zumindest einem der Ansprüche 1 bis 16, **dadurch gekennzeichnet, dass** zumindest die erste oder die zweite Lichtquelle (1,1') IR-Licht aussendet.

**18.** Vorrichtung nach zumindest einem der Ansprüche 1 bis 17, **dadurch gekennzeichnet, dass** zumindest die erste oder die zweite Linse (3, 3', 7) als Zylinderlinse (3, 3') und/oder als Fresnel-Linse (7) ausgebildet ist.

**19.** Vorrichtung nach zumindest einem der Ansprüche 1 bis 18, **dadurch gekennzeichnet, dass** zumindest die erste oder die zweite Umlenkeinheit eine Spiegeleinrichtung ist, die das empfangene Licht parallel zur Auswerteebene (16) in Richtung zur jeweiligen Kameraeinrichtung (4, 4') in der Rücksendeebene (17) zurücksendet.

**20.** Vorrichtung nach zumindest einem der Ansprüche 1 bis 19, **dadurch gekennzeichnet, dass** anstatt der Linsen Parabolreflektoren und/oder konkav ausgebildete Reflektoren vorgesehen sind.

**21.** Vorrichtung nach zumindest einem der Ansprüche 1 bis 20, **dadurch gekennzeichnet, dass** zumindest die erste oder die zweite Umlenkeinrichtung (8, 9; 8', 9') als Prisma ausgebildet ist.

**22.** Vorrichtung nach zumindest einem der Ansprüche 1 bis 21, **dadurch gekennzeichnet, dass** die Auswerteebene (16) und die Rücksendeebene (17) derart angeordnet sind, dass der sich bewegende Gegenstand (20) zuerst die Auswerteebene (16) und dann die Rücksendeebene (17) vorzugsweise im wesentlichen orthogonal durchfliegt.

**23.** Vorrichtung nach zumindest einem der Ansprüche 1 bis 22, **dadurch gekennzeichnet, dass** zumindest die erste oder die zweite Kameraeinrichtung (4, 4') als Zeilenkamera ausgebildet ist und zusammen mit zumindest der ersten oder der zweiten Linse (3, 3', 7) ein telezentrisches Objektiv bildet.

**24.** Vorrichtung nach zumindest einem der Ansprüche 1 bis 23, **dadurch gekennzeichnet, dass** zumindest die erste oder die zweite Umlenkeinheit das Licht zwei Mal um 90° umlenkt.

**25.** Vorrichtung nach zumindest einem der Ansprüche 1 bis 24, **dadurch gekennzeichnet, dass** das Licht in der Rücksendeebene (17) durch die jeweilige Umlenkeinheit einen Winkel aufweist, der einem Öffnungswinkel eines jeweiligen Objektivs (5) der zumindest ersten oder zweiten Kameraeinrichtung (4, 4') entspricht.

**26.** Vorrichtung nach zumindest einem der Ansprüche 1 bis 25, **dadurch gekennzeichnet, dass**

der Abstand zwischen der telezentrischen Auswerteebene (16) und der nicht-telezentrischen Rücksendeebene (17) mindestens so groß ist, dass der beide Ebenen (16, 17) durchfliegende Gegenstand während einer Integrationszeit eines Sensors (6, 6') der Kameraeinrichtung (4, 4') nur eine der beiden Ebenen (16, 17) durchfliegt.

27. Verfahren zur Erfassung der Position eines sich bewegenden Gegenstands (20), insbesondere eines Projektils oder Pfeils, mit einer Vorrichtung nach zumindest einem der Ansprüche 1 bis 26, wobei die Auswerteeinrichtung (11) von der ersten und der zweiten Kameraeinrichtung (4, 4') Positionswerte erhält, die x-Achsenwerten und y-Achsenwerten entsprechen und daraus eine Position in x- und y-Richtung des die Auswerteebene (16) durchfliegenden Gegenstands (20) ermittelt.

28. Verfahren nach Anspruch 27, **dadurch gekennzeichnet, dass** die ermittelten Positionswerte an einer Visualisierungseinrichtung angezeigt werden.

29. Verfahren nach Anspruch 27 oder 28, **dadurch gekennzeichnet, dass**
die ermittelten Positionswerte über eine Codiereinrichtung (15) mit Informationen gekoppelt werden, die eine Zuordnung der Positionswerte zu einer entsprechenden Vorrichtung erlauben, wenn mehrere Vorrichtungen in einem Schießstand vorgesehen sind.

30. Verfahren nach zumindest einem der Ansprüche 27 bis 29,
**dadurch gekennzeichnet, dass**
zur Plausibilitätskontrolle der ermittelten Position bzw. zur Erhöhung der Erfassungsgenauigkeit auch Positionswerte herangezogen werden, die beim Durchfliegen des Gegenstands der Rücksendeebene (17) erhalten werden.

31. Verfahren nach zumindest einem der Ansprüche 27 bis 30,
**dadurch gekennzeichnet, dass**
anhand der Anzahl der von der Kameraeinrichtung (4, 4') erfassten Bilder, auf denen ein Schatten des Gegenstands (20) erkennbar ist, auf eine Geschwindigkeit des Gegenstands (20) geschlossen wird, wobei die Geschwindigkeit als Plausibilitätskontrolle für das erfasste Signal verwendet wird.

Fig 1

EP 1 978 326 A1

Fig 2

Fig 3

Fig. 3a

EP 1 978 326 A1

Fig 4

Fig 5

Fig 6

Europäisches Patentamt

EUROPÄISCHER RECHERCHENBERICHT

Nummer der Anmeldung

EP 07 00 7246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 19 17 138 A1 (SICK ERWIN FA) 15. Oktober 1970 (1970-10-15)<br><br>* Abbildungen 1,3 *<br>* Seite 2, Zeile 8 - Zeile 13 *<br>* Seite 4, Zeilen 5-13 *<br>* Seite 5, Zeile 35 - Zeile 36 *<br>* Seite 8, Zeilen 7-12 * | 1,5-8, 10,12, 13,18, 25,27 | INV.<br>F41J5/02<br>G01B11/00<br>G01S5/16<br>G01V8/10 |
| Y<br>A | | 17,29,31<br>2,28 | |
| X | DE 31 32 172 A1 (FICHT GMBH [DE]) 3. März 1983 (1983-03-03)<br><br>* Abbildung 1 *<br>* Seite 6, Zeile 34 - Zeile 35 *<br>* Seite 7, Zeile 21 - Zeile 32 * | 1,5-7, 9-12,18, 19,25,27 | |
| X | US 6 717 684 B1 (FIKES J W [US] ET AL) 6. April 2004 (2004-04-06)<br><br>* Abbildungen 1,2A,3 *<br>* Spalte 4, Zeile 51 - Zeile 52 * | 1,5,8, 10,12, 19,25, 27,28 | RECHERCHIERTE SACHGEBIETE (IPC)<br><br>F41J<br>G01B<br>G01S<br>G01V |
| Y | | 23 | |
| X | EP 0 121 840 A (SIEMENS AG [DE]) 17. Oktober 1984 (1984-10-17)<br><br>* Abbildungen 1,2 * | 1,5,10, 12,19, 25,27 | |
| Y<br>A | | 23<br>14 | |

-/--

Der vorliegende Recherchenbericht wurde für alle Patentansprüche erstellt

| Recherchenort | Abschlußdatum der Recherche | Prüfer |
|---|---|---|
| Den Haag | 15. August 2007 | Van Leeuwen,Erik |

**Europäisches Patentamt**

**EUROPÄISCHER RECHERCHENBERICHT**

Nummer der Anmeldung

EP 07 00 7246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 95/07471 A (LASERSCORE INC [US]) 16. März 1995 (1995-03-16) <br><br> * Abbildung 5 * <br> * Seite 13, Zeile 3 - Zeile 5 * | 1,4,7, 9-13,18, 19,27 | |
| A | ----- | 14,23 | |
| Y | DE 199 11 375 A1 (HIPP JOHANN F [DE]) 21. September 2000 (2000-09-21) <br> * Abbildungen 2,4 * <br> * Spalte 5, Zeile 8 - Zeile 25 * | 29,31 | |
| Y,D | ----- <br> DE 44 15 944 A1 (RIENER KARL STEFAN [AT]) 23. November 1995 (1995-11-23) <br> * Spalte 3, Zeile 35 - Zeile 39 * | 17 | |
| A | * Spalte 1, Zeile 49 - Zeile 52 * | 23 | |
| A | ----- <br> DE 32 39 794 A1 (SCHMALENBACH P DIPL ING) 3. Mai 1984 (1984-05-03) <br> * Abbildung 5 * <br> * Seite 14, Zeile 18 - Zeile 24 * | 2,15 | RECHERCHIERTE SACHGEBIETE (IPC) |
| A | ----- <br> DE 91 16 984 U1 (MEYER PAUL [DE]) 15. Dezember 1994 (1994-12-15) <br> * Seite 6, Zeile 8 - Zeile 10 * <br> ----- | 15,17 | |

Der vorliegende Recherchenbericht wurde für alle Patentansprüche erstellt

| Recherchenort | Abschlußdatum der Recherche | Prüfer |
|---|---|---|
| Den Haag | 15. August 2007 | Van Leeuwen,Erik |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 07 00 7246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2007

| Im Recherchenbericht angeführtes Patentdokument | Datum der Veröffentlichung | Mitglied(er) der Patentfamilie | Datum der Veröffentlichung |
|---|---|---|---|
| DE 1917138 A1 | 15-10-1970 | KEINE | |
| DE 3132172 A1 | 03-03-1983 | CH 658134 A5 | 15-10-1986 |
| US 6717684 B1 | 06-04-2004 | KEINE | |
| EP 0121840 A | 17-10-1984 | US 4507557 A | 26-03-1985 |
| WO 9507471 A | 16-03-1995 | AU 7686494 A<br>US 5565686 A<br>US 5493112 A | 27-03-1995<br>15-10-1996<br>20-02-1996 |
| DE 19911375 A1 | 21-09-2000 | KEINE | |
| DE 4415944 A1 | 23-11-1995 | AT 193594 T<br>EP 0685701 A1<br>US 5637866 A | 15-06-2000<br>06-12-1995<br>10-06-1997 |
| DE 3239794 A1 | 03-05-1984 | KEINE | |
| DE 9116984 U1 | 15-12-1994 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4415944 A1